# EUROPEAN PATENT APPLICATION

(11) **EP 1 189 299 A2**
(43) Date of publication of application: **20.03.2002**
(21) Application number: 01122215.5
(22) Date of filing: 17.09.2001
(51) Int. Cl.: H01M 10/40

(54) **Secondary battery**

(30) Priority: 18.09.2000 JP 2000281887
(71) Applicant: SONY CORPORATION, Tokyo (JP)
(72) Inventor: Akashi, Hiroyuki, Shinagawa-ku, Tokyo (JP); Fujita, Shigeru, Shinagawa-ku, Tokyo (JP)
(74) Representative: Müller . Hoffmann & Partner Patentanwälte

(57) **Abstract**

Disclosed is a secondary battery in which the characteristic can be improved by optimizing the relation between the thickness of a positive electrode mixture layer and the thickness of a negative electrode mixture layer. The secondary battery comprises a rolled electrode body (20) in which a band-shaped positive electrode (21) and negative electrode (22) are rolled with a separator (23) in between. Lithium metal is to be precipitated in the negative electrode during charging. The capacity of the negative electrode is expressed by the sum of a capacity component by occluding/releasing lithium and a capacity component by precipitating/dissolving lithium metal. The ratio of the thickness of the positive electrode mixture layer to the thickness of the negative electrode mixture layer is 0.92 or more. Thereby, stable precipitation of lithium metal in the negative electrode can be achieved and a high energy density and an excellent cycle characteristic can be obtained.

## Description

### BACKGROUND OF THE INVENTION

### 1. Field of the Invention

The present invention relates to a secondary battery comprising a positive electrode, a negative electrode and an electrolyte, specifically to a secondary battery using light metal for an electrode reaction.

### 2. Description of the Related Art

Recently, portable electronic devices such as VTRs (Video Tape Recorders) with a built-in camera, cellular phones, or laptop computers have been widely in use, and there is a strong need for long-time-continuous-drive of the devices. In accordance with this, it has been highly desired to achieve a secondary battery with a large capacity and high energy density as portable power sources for the devices.

Examples of secondary batteries with a high energy density are lithium-ion secondary batteries using a material capable of occluding/releasing lithium (Li) such as carbonaceous material for the negative electrode, and lithium secondary batteries using lithium metal for the negative electrode. Especially, a lithium secondary battery is expected to obtain a higher energy density than that of a lithium-ion secondary battery since the theoretical electrochemical equivalent of lithium metal in the lithium secondary battery is as large as 2054 mAh/dm³, which is equivalent to 2.5 times a graphite material used in a lithium-ion secondary battery.

However, precipitating/dissolving reaction of lithium metal is used in the negative electrode of the lithium secondary battery so that the volume of the negative electrode largely changes at the time of charging/discharging. Therefore, the charging/discharging cycle characteristic is poor and it has been difficult to put a lithium secondary battery in a practical use.

Thereby, the inventors have developed a secondary battery in which the capacity of the negative electrode is expressed by the sum of the capacity components obtained by occluding/releasing lithium and by precipitating/dissolving lithium. A carbonaceous material capable of occluding/releasing lithium is used for the negative electrode and lithium is to be precipitated onto the surface of the carbonaceous material during charging. With the secondary battery, the cycle characteristic can be improved while achieving a high energy density. However, in order to put the secondary battery in a practical use, the battery structure such as the positive electrode and the negative electrode needs to be optimized so as to achieve further improved and stable characteristic.

For example, the relation between the thickness of a positive electrode mixture layer which occludes/releases lithium and the thickness of a negative electrode mixture layer which occludes/releases lithium is one of the important factors among the battery structure, and an excellent characteristic can be obtained by optimizing the relation. In a lithium-ion secondary battery of the related art, various kinds of studies have been conducted on the relation between the thicknesses of the positive electrode mixture layer and negative electrode mixture layer. For example, the capacity of the negative electrode is often designed to be slightly larger than that of the positive electrode by thickening the negative electrode mixture layer than the positive electrode mixture layer to avoid the precipitation of lithium metal to the negative electrode (see Japanese Patent No. 2701347 ).

On the contrary, the secondary battery developed earlier by the inventors is different from the lithium-ion secondary battery of the related art in terms of the electrode reaction, using occluding/releasing and precipitating/dissolving of lithium in the negative electrode. Therefore, the relation of the thicknesses of the positive electrode mixture layer and the negative electrode mixture layer in the lithium-ion secondary battery of the related art cannot be applied as is.

### SUMMARY OF THE INVENTION

The invention has been designed to overcome the foregoing problems. An object is to provide a secondary battery in which the characteristic can be improved by optimizing the relation between the thicknesses of the positive electrode mixture layer and the negative electrode mixture layer.

A secondary battery of the invention comprises a positive electrode, a negative electrode and an electrolyte. The positive electrode includes a positive electrode mixture layer capable of occluding and releasing light metal and the negative electrode includes a negative electrode mixture layer capable of occluding and releasing light metal. Capacity of the negative electrode is expressed by the sum of a capacity component by occluding and releasing light metal and a capacity component by precipitating and dissolving light metal. The ratio (A/B) of thickness A of the positive electrode mixture layer to thickness B of the negative electrode mixture layer is 0.92 or more.

In a secondary battery of the invention, the capacity of the negative electrode is expressed by the sum of a capacity component by occluding/releasing light metal and a capacity component by precipitating/dissolving light metal. The ratio (A/B) of thickness A of the positive electrode mixture layer to thickness B of the negative electrode mixture layer is 0.92 or more. Therefore, both of the occlusion and release of light metal and precipitation and dissolution of light metal in the negative electrode are proceeded stably and effectively.

Other and further objects, features and advantages of the invention will appear more fully from the following description.

### BRIEF DESCRIPTION OF THE DRAWINGS

Fig. 1 is a cross section showing the configuration of a secondary battery according to an embodiment of the invention.

Fig. 2 is a cross section showing an enlarged figure taken out of a rolled electrode body in the secondary battery shown in Fig. 1.

Fig. 3 is an X-ray diffraction profile of a negative electrode according to Example 1 of the invention.

Fig. 4 is an X-ray diffraction profile of a negative electrode according to Comparative Example 1 of the invention.

### DETAILED DESCRIPTION OF THE PREFERRED EMBODIMENTS

In the followings, an embodiment of the invention will be described in detail by referring to the drawings.

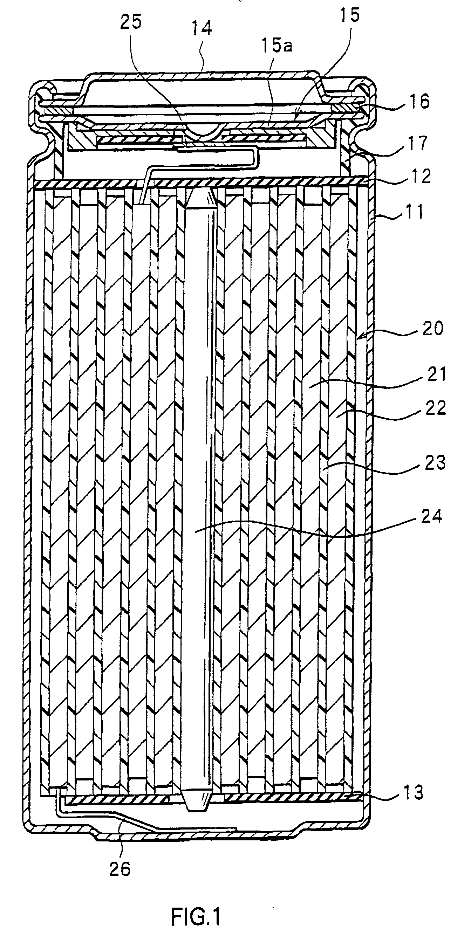

Fig. 1 shows the cross sectional structure of a secondary battery according to an embodiment of the invention. The secondary battery is so-called a jelly roll type and having a rolled electrode body 20 obtained by rolling a band-shaped positive electrode 21 and negative electrode 22 with a separator 23 in between in a battery can 11 having a substantially hollow cylindrical column shape. The battery can 11 is made of, for example, iron plated with nickel. One end of the battery can 11 is closed and the other end is opened. A pair of insulating plates 12 and 13 are placed inside the battery can 11 vertical to the peripheral face of the roll so as to sandwich the rolled electrode body 20.

A battery cover 14, and a safety valve mechanism 15 and a PTC (positive temperature coefficient) 16, which are provided inside the battery cover 14, are attached to the open end of the battery can 11 by being caulked with a gasket 17 in between, and the battery can 11 is sealed. The battery cover 14 is made of, for example, a material similar to that of the battery can 11. The safety valve mechanism 15 is electrically connected to the battery cover 14 with the PTC 16. When an internal short circuit occurs or the internal pressure of the battery exceeds a predetermined value due to heating from outside or the like, a disk plate 15a is turned upside down, thereby disconnecting the electrical connection between the battery cover 14 and the rolled electrode body 20. The PTC 16 is used to limit current by increasing resistance when the temperature rises, thereby preventing abnormal heating caused by a heavy current. The PTC 16 is made of, for example, barium titanate based semiconductor ceramics. The gasket 17 is made of, for example, an insulating material and asphalt is applied over the surface.

The rolled electrode body 20 is rolled around, for example, a center pin 24 as a center. A positive electrode lead 25 made of aluminum or the like is connected to the positive electrode 21 of the rolled electrode body 20 and a negative electrode lead 26 made of nickel or the like is connected to the negative electrode 22. The positive electrode lead 25 is electrically connected to the battery cover 14 by being welded to the safety valve mechanism 15 while the negative electrode lead 26 is electrically connected to the battery can 11 by welding.

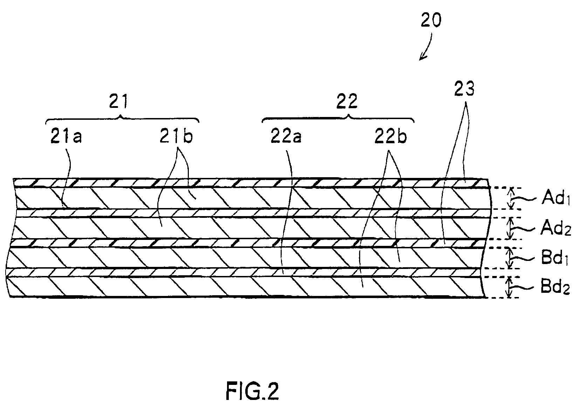

Fig. 2 shows an enlarged view of part of the rolled electrode body 20 shown in Fig. 1. The positive electrode 21 has a configuration in which, for example, a positive electrode mixture layer 21b is provided on both sides of a positive electrode collector layer 21a. Although not shown in the figure, the positive electrode mixture layer 21b may be provided only on one side of the positive electrode collector layer 21a. The positive electrode collector layer 21a is about 5 µm to 50 µm thick and formed of a metallic foil such as an aluminum foil, a nickel foil or a stainless foil. The positive electrode mixture layer 21b is formed containing a positive electrode material capable of occluding/releasing lithium, which is a light metal.

Appropriate examples of a positive electrode material capable of occluding/releasing lithium are lithium oxide, lithium sulfide or lithium-contained compound such as an intercalation compound containing lithium. Two or more kinds of these may be mixed to be used. Especially, it is preferable to contain lithium composite oxide, which mainly contains LiₓMO₂, in order to increase the energy density. M is preferable to be one or more kinds of transition metals. Specifically, it is preferable to be at least one kind selected from the group consisting of cobalt (Co), nickel (Ni), manganese (Mn), iron (Fe), aluminum (Al), vanadium (V), and titanium (Ti). Also, the value of x varies depending on the charging/discharging state of the battery and generally lies within the range of 0.05≦x≦1.10. Specific examples of the lithium composite oxide are LiₓCoO₂, LiₓNiO₂, LiₓNi_{y}Co_{1-y}O₂ or Liₓ Mn₂ O₄ (where x≒1, 0 < y < 1).

Such lithium composite oxides are prepared in the following manner. For example, carbonate, nitrate, oxide, or hydroxide of lithium, and carbonate, nitrate, oxide, or hydroxide of transition metal are mixed in a desired composition, and grinded, and then calcined in an oxidizing atmosphere at a temperature within the range of 600°C to 1000°C.

The positive electrode mixture layer 21b also contains, for example, a conductive agent and may contain a binder if necessary. Examples of the conductive agent are carbonaceous materials such as graphite, carbon black, or Ketjen black. One kind or mixture of two or more kinds of these is used. Metallic materials or conductive polymer materials having conductivity may be used other than the carbonaceous materials. The preferable content of the positive electrode material and the conductive agent in the positive electrode mixture layer 21b is, for example, within the range of 0.1 parts by mass to 20 parts by mass, both inclusive, of the conductive agent to 100 parts by mass of the positive electrode material. Within this range, additional discharging capacity of the battery can be ensured without decreasing the battery capacity.

Examples of the binder are synthetic rubber such as styrene-butadiene rubber, fluororubber and ethylene-propylene-diene rubber, or a polymer material such as polyvinylidene fluoride. One kind or mixture of two or more kinds of these may be used For example, in the case where the positive electrode 21 and the negative electrode 22 are rolled as shown in Fig. 1, it is preferable to use styrene-butadiene rubber or fluororubber, having flexibility, as a binder. The preferable content of the positive electrode material and the binder in the positive electrode mixture layer 21b is, for example, within the range of 1 part by mass to 20 parts by mass, both inclusive, of the binder, and more preferably 2 parts by mass to 10 parts by mass of the binder to 100 parts by mass of the positive electrode material.

The negative electrode 22 has a configuration in which, for example, a negative electrode mixture layer 22b is provided on both sides of a negative electrode collector layer 22a. Although not shown in the figure, the negative electrode mixture layer 22b may be provided only on one side of the negative electrode collector layer 22a. The negative electrode collector layer 22a is about 5 µm to 30 µm thick and formed of a metallic foil such as a copper foil, a nickel foil or a stainless foil. The negative electrode mixture layer 22b is formed containing a negative electrode material capable of occluding/releasing lithium, which is a light metal, and may contain, for example, the same binder as that in the positive electrode mixture layer 21b. The preferable content of the negative electrode material and the binder in the negative electrode mixture layer 22b is, as in the positive electrode mixture layer 21b, within the range of 1 part by mass to 20 parts by mass, both inclusive, and more preferably 2 parts by mass to 10 parts by mass to 100 parts by mass of the negative electrode material.

Examples of the negative electrode material capable of occluding/releasing lithium are carbonaceous materials, metallic compounds, silicon, silicon compounds, or polymer materials. One kind or mixture of two or more kinds of these is used. The carbonaceous materials are graphite, non-graphitizing carbon, graphitizing carbon and the like. The metallic compounds include oxide such as SnSiO₃ or SnO₂ and the polymer materials include polyacetylene, polypyrrole and the like.

Especially, the carbonaceous material is preferable since the changes in the crystal structure occurred at the time of charging/discharging is very small. Therefore, a high charging/discharging capacity can be obtained and an excellent cycle characteristic can be obtained. In particular, graphite is preferable in terms of high electrochemical equivalent and high energy density.

For example, graphite with the true density of 2.10 g/cm³ or more is preferable and the one with 2.18 g/cm³ or more is more preferable. In order to obtain such a true density, it is necessary that the thickness of C-axis crystal of (002) plane is 14.0 nm or more. Also, the spacing of (002) plane is preferably less than 0.340 nm, and more preferably within the range of 0.335 nm to 0.337 nm, both inclusive.

The graphite may be natural graphite or artificial graphite. The artificial graphite can be obtained by, for example, carbonizing an organic material, applying a heat treatment at a high temperature, and then grinding/classifying it. The heat treatment at a high temperature is conducted, for example, in the following manner. The organic material is carbonized at a temperature of from 300°C to 700°C in an inert gas flow such as nitrogen (N₂) if necessary; the temperature is raised to 900°C to 1500°C at the rate of 1°C to 100°C per minute and maintain the temperature for 0 to 30 hours for calcinations; the temperature is raised to 2000°C or above, and preferably to 2500°C or above and the temperature is maintained for an appropriate length of time.

As the organic materials for the starting material, coal or pitch can be used. Examples of the pitches are tar which can be obtained by high-temperature thermal cracking of, for example, coal tar, ethylene bottom oil or crude oil, materials obtained from asphalt or the like by performing distillation (vacuum distillation, atmospheric distillation, steam distillation), thermal polycondensation, extraction, chemical polycondensation and the like, materials generated at the time of dry distillation of wood, polyvinyl chloride resin, polyvinyl acetate, polyvinyl butylate and 3, 5-dimethyl-phenol resin. During carbonization, coal and pitch exist in a liquid state at a temperature of about 400°C at the maximum and the aromatic rings become a state of laminated orientation by being condensed and plycycled through maintaining the temperature. At about 500°C or above, semi coke, which is a precursor of solid carbon, is formed (liquid phase carbonization process).

Examples of organic materials are condensed polycyclic hydrocarbon compounds such as naphthalene, phenanthrene, anthracene, triphenylene, pyrene, perylene, pentaphene, pentacene, and the derivatives thereof (e.g., their carboxylic acid, carboxylic anhydride, carboxylic imide), and the mixtures thereof. Other examples are condensed heterocyclic compounds such as acenaphtylene, indole, isoindole, quinoline, isoquinoline, quinoxaline, phthalazine, carbazole, acridine, phenazine, phenantolidine, and the derivatives and the mixtures thereof.

Grinding may be performed at any time before/after carbonization and calcination, or during the process of programming the temperature before graphitization. In these cases, a heat treatment for graphitization is conducted at last in a powder state. However, in order to obtain graphite powder with high bulk density and breaking strength, it is preferable to conduct the heat treatment after molding the starting material and then grinds and classifies the obtained graphitizing molded body.

For example, when fabricating a graphitized molded body, cokes to be a filler and binder pitch to be a molding agent or a sintering agent are mixed and molded. Then, a calcinating process of applying the heat treatment at 1000°C or below, and a pitch-impregnation process of impregnating the binder pitch which is fused in the calcined body are repeated a several times. Then, the heat treatment is conducted at a high temperature. The impregnated binder pitch is carbonized and graphitized through the above-mentioned heat treatment process. In this case, the filler (cokes) and the binder pitch are used as the starting material so that it is graphitized as polycrystal, and sulfur and nitrogen containing in the starting material generates as gas during the heat treatment, thereby, forming micro vacancies on the way through Because of the vacancies, the occlusion/release of lithium is readily performed and the process efficiency is improved industrially. Also, filler having moldibility or sintering characteristic by itself may be used as the base material for the molded body. In this case, it is unnecessary to use binder pitch.

As the non-graphitizing carbon, it is preferable that the spacing of (002) plane is 0.37 nm or more, and the true density is less than 1.70 g/cm³, while exhibiting no exothermic peak higher than 700°C in the differential thermal analysis (DTA) in the air.

The non-graphitizing carbon can be obtained by, for example, applying a heat treatment on an organic material at about 1200°C, and then grinding and classifying it. A heat treatment is conducted by, for example, carbodizing (solid phase carbonization process) the material at 300°C to 700°C if necessary, programming the temperature to 900°C to 1300°C at the rate of 1°C to 100°C per minute, and maintaining the temperature for 0 to 30 hours. The grinding may be performed before/after carbonization or during the process of programming the temperature.

Examples of the organic materials as the starting material are polymer and copolymer of furfuryl alcohol and furfural, or a furan resin which is a copolymer of the polymer and other resin. Other examples are a phenol resin, an acryl resin, a vinyl halide resin, a polyimide resin, a polyamide-imide resin, a polyamide resin, a conjugate resin such as polyacetylene or polyparaphenylene, cellulose and cellulosic, coffee beans, bamboos, crustacea including chitosan, and bio-cellulose using bacteria. Still other examples are a compound obtained by bonding a functional group including oxygen (O) (so-called an oxygen crosslinking) to a petroleum pitch in which the fraction of the number of atoms of hydrogen (H) and carbon (C), H/C, is, for example, 0.6 to 0.8.

Preferably, the compound contains 3 % or more oxygen, and more preferably 5 % or more (see Japanese Patent Application Laid-open Hei 3-252053). This is because the content of oxygen influences the crystal structure of the carbonaceous material, and with more than the above-mentioned content, the properties of the non-graphitizing carbon can be improved and the capacity of the negative electrode can be increased. Petroleum pitch can be obtained by, for example, tar obtained by high-temperature thermal cracking of coal tar, ethylene bottom oil, crude oil or the like, and materials obtained from asphalt or the like by performing distillation (vacuum distillation, atmospheric distillation, steam distillation), thermal polycondensation, extraction, chemical polycondensation and the like. Examples of methods for forming oxidation crosslinking are a wet method in which aqueous solutions of nitric acid, sulfuric acid, hypochlorous acid or a mixed acid of these and the petroleum pitch are activated, a dry method in which an oxidizing gas of air or oxygen and the petroleum pitch are activated, and a method in which a solid reagent of sulfur, ammonium nitrate, ammonium persulfate, or ferric chloride and the petroleum pitch are activated.

The organic materials to be the starting material are not limited to these but other organic materials may be applicable as long as the material is capable of becoming non-graphitizing material after a solid phase carbonization process by oxygen crosslinking processing and the like.

As the non-graphitizing carbonaceous material, the compound mainly containing phosphor (P), oxygen and carbon, which is disclosed in Japanese Patent Application Laid-open Hei 3-137010, is also preferable since it exhibits the above-mentioned property parameter other than the materials prepared by using the above-mentioned organic materials as the starting material.

In the secondary battery, during the process of charging, lithium metal starts to precipitate in the negative electrode 22 at the point where the open circuit voltage (that is, the battery voltage) is lower than the overcharge voltage. In other words, the capacity of the negative electrode 22 is expressed by the sum of the capacity component of occluding/releasing lithium and the capacity component of precipitating/dissolving lithium metal. The overcharge voltage herein means an open circuit voltage when the battery is overcharged, and indicates the voltage higher than the open circuit voltage of the "full-charged" battery, which is defined in "GUIDE LINE FOR SAFETY EVALUATION ON SECONDARY LITHIUM CELLS" (SBA G1101) which is, for example, one of the guide lines appointed by JAPAN STORAGE BATTERY ASSOCIATION (BATTERY ASSOCIATION OF JAPAN).

Therefore, in the secondary battery, a high energy density can be obtained and the cycle characteristic can be improved. Although the secondary battery is the same as the lithium secondary battery of the related art in respect to precipitation of lithium metal in the negative electrode 15, it is considered that by precipitating lithium metal in the negative electrode material capable of occluding/releasing lithium, changes in the volume of the negative electrode 22 due to charging/discharging can be suppressed while maintaining the capacity of the negative electrode 22.

The ratio of the thickness A of the positive electrode mixture layer 21b to the thickness B of the negative electrode layer 22b is 0.92 or more, when expressed by the thickness A of the positive electrode mixture layer 21b to the thickness B of the negative electrode layer 22b (A/B). The ratio of the thickness (A/B) varies depending on the capacities of the positive electrode mixture layer 21b and the negative electrode mixture layer 22b. If the ratio is equal to or more than 0.92, lithium metal can be stably precipitated in the negative electrode 22 in the state where the open circuit voltage is lower than the overcharge voltage, and a high energy density and an excellent cycle characteristic can be obtained. Also, when the ratio of the thickness (A/B) becomes larger, the energy density tends to be larger. However, when the ratio is too large, the cycle characteristic deteriorates so that the ratio of the thickness (A/B) is preferable to be 2.0 or less. However, it will be possible to have the ratio of the thickness (A/B) larger than 2.0 if technology for improving the cycle characteristic is developed in the future.

The thickness A of the positive electrode mixture layer 21b is expressed by the sum (Ad₁ + Ad₂) of the thicknesses of both sides Ad₁, Ad₂ of the positive electrode collector layer 21a. The thickness B of the negative electrode mixture layer 22b is also expressed by the sum (Bd₁ + Bd₂) of the thicknesses of both sides Bd₁, Bd₂ of the negative electrode collector layer 22a. The positive electrode mixture layer 21b and the negative electrode mixture layer 22b may be provided only on one side but not on both sides of the positive electrode collector layer 21a or the negative electrode collector layer 22a on the end of the outermost or innermost of the rolled electrode body 20. In this case, the thickness A of the positive electrode mixture layer 21b is also expressed by Ad₁ + Ad₂ and the thickness B of the negative electrode mixture layer 22b also expressed by Bd₁ + Bd₂, and the thickest portions thereof are defined as the thickness A of the positive electrode mixture layer 21b and as the thickness B of the negative electrode mixture layer 22b of the invention. It is also the same in the case where the positive electrode mixture layer 21b is provided only on one side of the positive electrode collector layer 21a or the negative electrode mixture layer 22b is provided only on one side of the negative electrode collector layer 22a. In this case, the sum of the thicknesses of both sides refers to the thickness of one side.

The thickness B of the negative electrode mixture layer 22b is the thickness in the state where lithium metal is not precipitated in the negative electrode mixture layer 22b (e.g., the thickness in the complete-discharged state). In other words, the thickness B does not include the thickness of the precipitated lithium metal. The complete-discharged state means the case where no electrode reactive material (lithium ion in the embodiment) is supplied from the negative electrode 22 to the positive electrode 21. For example, in the case of the secondary battery of the embodiment and a lithium-ion secondary battery, it can be considered as the "complete-discharged" state at the point where the closed circuit voltage reaches 2.75 V.

For example, preferably, the thickness A of the positive electrode mixture layer 21b and the thickness B of the negative electrode mixture layer 22b lies within the range of 80 µm to 250 µm, both inclusive. If it is less than 80 µm, the thicknesses thereof to the positive electrode collector layer 21a and the negative electrode collector layer 22a become relatively thin. Therefore, the volume of the positive electrode mixture layer 21b and the negative electrode mixture layer 22b occupying the battery become small so that the energy density deteriorates. If the thicknesses are more than 250 µm, the positive electrode mixture layer 21b and the negative electrode mixture layer 22b are easily peeled from the positive electrode collector layer 21a and the negative electrode collector layer 22a.

The separator 23 is formed of a porous film made of synthetic resin such as polytetorafluoroethylene, polypropylene, polyethylene or the like, or a ceramic porous film. Also, it may have a configuration in which two or more kinds of these porous films are laminated. Of these porous films, a porous film made of polyolefin is preferable since it is excellent in preventing short circuit and can improve the safety of the battery by the shutdown effect. Specifically, polyethylene is preferable as the material for forming the separator 23 because it can obtain the shutdown effect at temperatures within the range of 100°C to 160°C, both inclusive, and is also excellent in electrochemical stability. Polypropylene is also preferable. Other resins having chemical stability can be used by being copolymerized or blended with polyethylene or polypropylene.

The porous film made of polyolefin can be obtained in the following manner. For example, a liquid low-volatile solvent in a fused state is kneaded to a fused polyolefin composite, thereby obtaining a solvent with a high concentration of uniform polyolefin composite, the resultant solvent is molded by a dice, cooled to obtain a gel sheet, and then drawn.

Nonane, decane, decaline, p-xylene, undecane, low-volatile aliphatics such as liquid paraffin, and a cyclic hydrocarbon can be used as the low-volatile solvent, for example. Preferably, the proportion of mixing the polyolefin composite and the low-volatile solvent is from 10 percent or more by mass to 80 percent or less by mass of polyolefin composite and more preferably from 16 percent or more by mass to 70 percent or less by mass, provided the sum of both is 100 percent by mass. If too little polyolefin composite is contained, swelling or neck-in becomes large in the exit of the dice at the time of molding. This makes it difficult to form the sheet. On the other hand, if too much polyolefin is contained, it is difficult to prepare the homogeneous solvent.

When molding the solvent with a high concentration of polyolefin composite by a sheet dice, it is preferable that the gap is, for example, from 0.1 mm to 5 mm, both inclusive. Preferably, the pressing temperature is from 140°C to 250°C. both inclusive, and the pressing speed is from 2 cm/minute to 30 cm/minute, both inclusive.

Cooling is performed at least until the temperature is reduced to a gelling temperature or below. Examples of cooling methods are a method of making a direct contact with cold wind, coolant, or other cooling medium, and a method of making a contact with a roll cooled by a coolant. The solvent with a high concentration of polyolefin composite may be taken back before or during the cooling process by a fraction of from 1 to 10, both inclusive, preferably 1 to 5, both inclusive. If the fraction is too large, the neck-in becomes too large and breakings are easily caused when drawing the sheet, which is not preferable.

Drawing of the gel sheet is preferable to be conducted by biaxial drawing by tentering method, a roll method, a pressing method, or a combination of these methods after heating the gel sheet. At this time, simultaneous drawing in both longitudinal and lateral direction or sequential drawing may be conducted. Particularly, the simultaneous secondary drawing is preferable. The preferable drawing temperature is equal to or below the temperature added 10°C to the melting point of polyolefin composition, and more preferable temperature is within the range of the dispersing temperature of crystal or above to below the melting point. If the drawing temperature is too high, the effective molecular chain orientation by drawing cannot be obtained due to fusion of the resin, which is not preferable. If the drawing temperature is too low, the resin is softened insufficiently so that the sheet is easily broken when being drawn and cannot be drawn with high magnification.

After drawing the gel sheet, it is preferable to clean the drawn film with a volatile solvent and then remove the residual low-volatile solvent. After cleaning, the drawn film is dried by heating or sending an air and the cleaning solvent is volatilized. Examples of the cleaning solvents are hydrocarbon such as pentane, hexane, hebutane; chlorine hydrocarbon such as methylene chloride, carbon tetrachloride; carbon fluoride such as ethane trifluoride; and ether such as diethyl ether, dioxane, all of these have a volatilizing characteristic. The cleaning solvents are selected according to the used low-volatile solvent, and used alone or by mixture. Cleaning is conducted by a method of soaking the drawn film in a volatile solvent, a method of sprinkling the volatile solvent over the film, or a combined method of these. The drawn film is cleaned until the residual low-volatile solvent is reduced to less than 1 part by mass to 100 parts by mass of the polyolefin composite.

An electrolytic solution, which is an electrolytic solution, is impregnated with the separator 23. The electrolytic solution is obtained by dissolving lithium salt as an electrolytic salt in a liquid nonaqueous solvent. The liquid nonaqueous solvent is a nonaqueous compound with intrinsic viscosity of, for example, 10.0 mPa s or less at 25°C. As the nonaqueous solvent, it is preferable to use the solvent with relatively high electrochemical stability such as ethylene carbonate, propylene carbonate, diethyl carbonate or methyl ethyl carbonate as the main solvent. One of or the mixture of two or more of these may be used.

As the nonaqueous solvent, the following sub-solvent may be mixed with the main solvent. For example, butylene carbonate, γ-butylolactone, γ-valerolactone, the solvent substituted fluorine group in part or all for hydrogen group of these compounds, 1,2-dimethoxyethane, tetrahydrofuran, 2-methyl tetrahydrofuran, 1,3-dioxolane, 4-methyl-1,3-dioxolane, methyl acetate, methyl propionate, acetonitrile, glutaronitrile, adiponitrile, methoxyacetonitrile, 3-methoxypropylenitrile, N,N-dimethylformamid, N-methylpyrrolidinone, N-methyloxzolidinone, N,N-dimethylimidazolidinone, nitromethane, nitroethane, sulfolane, dimethylsulfoxyde, and trimethyl phosphate are mixed. One of or the mixture of two or more of these may be used.

Examples of appropriate lithium salt are LiPF₆, LiBF₄, LiAsF₆, LiClO₄, LiB(C₆H₅)₄, LiCH₃SO₃, LiCF₃SO₃, LAN(SO₂CF₃)₂, LiC(SO₂CF₃)₃, LiAlCl₄, LiSiF₆, LiCL, and LiBr. One of or the mixture of two or more of these is used. Especially, LiPF₆ is preferable so that a high ion conductivity can be obtained while further improving the cycle characteristic. The concentration of lithium salt to the nonaqueous solvent is preferable to be 2.0 mol/kg or less, and more preferable to be 0.5 mol/kg or more. This range enables to improve the ion conductivity of the electrolytic solution.

Instead of using the electrolytic solution, a gel electrolyte in which an electrolytic solution is held in a host high-molecular compound may be used. The gel electrolyte is not limited in its composition or the structure of the host high-molecular compound as long as the ion conductance is 1 mS/cm or more at the room temperature. The electrolytic solution (that is, a liquid nonaqueous solvent and an electrolytic salt) is as described above. Examples of the host high-molecular compound are poly acrylnitrile, polyvinylidene fluoride, copolymer of polyvinylidene fluoride and polyhexafluoropropylene, polytetrafluoro-ethylene, polyhexafluoropropylene, polyethylene oxide, polypropylene oxide, polyphosphazene, polysiloxane, polyvinyl acetate, polyvinyl alcohol, polymethyl methacrylate, polyacrylate. polymethacrylate, styrene-butadiene rubber, polystyrene, and polycarbonate. Especially, in respect to the electrochaemical stability, it is preferable to use the high-molecular compound with the structure of polyacrylnitrile, polyvinylidene fluoride, polyhexafluoro-propylene or polyethylene oxide. The amount of adding the host high-molecular compound to the electrolytic solution varies depending on the compatibility. In general, it is preferable to add the amount of the host high-molecular compound equivalent to 5 to 50 percent by mass of the electrolytic solution.

The concentration of the lithium salt is, like the electrolytic solution, preferable to be 2.0 mol/kg or less, and more preferable to be 0.5 mol/kg or more to the nonaqueous solvent. The nonaqueous solvent herein includes not only a liquid nonaqueous solvent but also a nonaqueous solvent dissociating the electrolytic salt. Therefore, in the case where the host high-molecular compound having ion conductivity is used, the host high-molecular compound is also included as the nonaqueous solvent.

The secondary battery can be manufactured in the following manner, for example.

First, a positive electrode mixture is prepared by mixing, for example, a positive electrode material capable of occluding/releasing lithium, a conductive agent and a binder. The positive electrode mixture is dispersed in a solvent of N-methyl-2-pyrrolidone or the like to obtain positive electrode mixture slurry in the form of paste. The positive electrode mixture slurry is applied to both sides of the positive electrode collector layer 21a and dried. Then, the positive electrode collector layer 21a is compression molded by a roller press or the like to form the positive electrode mixture layer 21b, and then, the positive electrode 21 is fabricated.

Then, a negative electrode mixture is prepared by mixing, for example, a negative electrode material capable of occluding/releasing lithium and a binder. The negative electrode mixture is dispersed in a solvent of N-methyl-2-pyrrolidone or the like to obtain negative electrode mixture slurry in the form of paste. The negative electrode mixture slurry is applied to the negative electrode collector layer 22a and dried. Then, the negative electrode collector layer 22a is compression molded by a roller press or the like to form the negative electrode mixture layer 22b, and then, the negative electrode 22 is fabricated.

Then, the positive electrode lead 25 is attached to the positive electrode collector layer by welding or the like while the negative electrode lead 26 is attached to the negative electrode collector layer by welding or the like. Then, the positive electrode 21 and the negative electrode 22 are rolled with the separator 23 in between. The tip of the negative electrode lead 26 is welded to the battery can 11 while the tip of the positive electrode lead 25 is welded to the safety valve mechanism 15. The positive electrode 21 and the negative electrode 22 rolled together are sandwiched by a pair of insulating plates 12 and 13 and enclosed inside the battery can 11. After enclosing the positive electrode 21 and the negative electrode 22 inside the battery can 11, an electrolyte is injected inside the battery can 11 so that the separator 23 is impregnated with the electrolyte. The battery cover 14, the safety valve mechanism 15 and the PTC 16 are fixed to the open end of the battery can 11 by caulking with the gasket 17. Thereby, a secondary battery shown in Fig. 1 is fabricated.

The secondary battery acts as follows.

When the secondary battery is charged, lithium ions are released from the positive electrode mixture layer 21b, passes through the electrolytic solution impregnated in the separator 23 and occluded first in the negative electrode material capable of occluding/releasing lithium contained in the negative electrode mixture layer 22b. When charging is continued, in the state where the open circuit voltage is lower than the overcharge voltage, the charging capacity goes beyond the charging capacity of the negative electrode material so that lithium metal starts to precipitate on the surface of the negative electrode material. After that, lithium metal continues to precipitate in the negative electrode 22 until the charging is completed. Thereby, the exteriority of the negative electrode mixture layer 22b changes from black to gold, and then to silver when using, for example, a carbonaceous material as the negative electrode material.

Then, when the battery is discharged, first, lithium metal precipitated in the negative electrode 22 is dissolved as ions, passes through the electrolytic solution impregnated in the separator 23, and then occluded in the positive electrode mixture layer 21b. When discharging is further continued, lithium ions occluded in the negative electrode material in the negative electrode mixture layer 22b are released and occluded in the positive electrode mixture layer 21b via the electrolytic solution. Therefore, in the secondary battery, both of the characteristics of the lithium secondary battery and lithium-ion secondary battery of the related art, that is, a high energy density and an excellent cycle characteristic can be obtained. Especially, in the embodiment, the ratio (A/B) of the thickness A of the positive electrode mixture layer 21b to the thickness B of the negative electrode mixture layer 22b is set to be 0.92 or more Therefore, stable precipitation of lithium in the negative electrode 22 can be achieved or more excellent characteristic can be stably obtained.

As described, in the embodiment, the ratio (A/B) of the thickness A of the positive electrode mixture layer 21b to the thickness B of the negative electrode mixture layer 22b is set to be more than 0.92, inclusive. Therefore, lithium metal can be stably precipitated in the negative electrode 22 in the state where the open circuit voltage is lower than the overcharge voltage. Thereby, a high energy density and an excellent cycle characteristic can be stably obtained.

Especially, by setting the thickness A of the positive electrode mixture layer 21b and the thickness B of the negative electrode mixture layer 22b within the range of 80 µm to 250 µm, both inclusive, the energy density can be more improved and peeling of the positive electrode mixture layer 21b and the negative electrode mixture layer 22b can be prevented.

### [EXAMPLE]

Specific Examples of the invention will be described in detail.

As Examples 1 to 7, jelly roll type secondary batteries as shown in Fig. 1 were fabricated. Examples will be described by referring to Fig. 1 using the same numeral references as in Fig. 1.

First, lithium-cobalt composite oxide (LiCoO₂) as the positive electrode material was obtained by mixing lithium carbonate (Li₂CO₃) and cobalt carbonate (CoCO₃) in the proportion of Li₂CO₃ : CoCO₃ = 0.5 : 1 (molar fraction) and calcining it in the air at 900°C for five hours. When the obtained lithium-cobalt composite oxide was measured by performing X-ray diffraction, the peak was very similar to that of LiCoO₂ registered in JCPDS file. Then, the lithium-cobalt composite oxide was grinded to be in a form of powder with the accumulated 50 % particle diameter being 15 µm, which can be obtained by a laser diffraction, to obtain a positive electrode material. Subsequently, 95 percent by mass of the lithium-cobalt composite oxide powder and 5 percent by mass of lithium carbonate are mixed. After that, 94 percent by mass of the resultant mixture, 3 percent by mass of ketjen black as a conductive agent, and 3 percent by mass of polyvinylidene fluoride as a binder were mixed in order to prepare the positive electrode mixture. Then, the positive electrode mixture was dispersed in N-methyl-pyrrolidone, which is a solvent, to obtain slurry which was then uniformly applied on both sides of a positive electrode collector layer 21a made of aluminum foil band of 20 µm thick and then dried and compression molded in order to form the positive electrode mixture layer 21b. Thereby, the positive electrode 21 was fabricated. At this time, in Examples 1 to 7, the thickness A of the positive electrode mixture layer was changed as shown in Table 1. Then, the positive electrode lead 25 made of aluminum was attached on one end of the positive electrode collector layer 21a.

**[Table 1]**

| | Thickness A of Positive Electrode Mixture Layer | Thickness B of Negative Electrode Mixture Layer | Ratio of Thickness A/B | Discharging Capacity (mAh) | Energy Density (Wh/dm³) | Discharging Capacity Retention Rate (%) | Li Metal Diffraction Peak |
|---|---|---|---|---|---|---|---|
| Example 1 | 132.0 | 140.2 | 0.942 | 857 | 325 | 90.2 | Yes |
| Example 2 | 132.0 | 127.2 | 1.038 | 898 | 341 | 91.3 | Yes |
| Example 3 | 132.0 | 111.3 | 1.186 | 946 | 359 | 91.8 | Yes |
| Example 4 | 132.0 | 95.4 | 1.384 | 997 | 379 | 89.3 | Yes |
| Example 5 | 182.0 | 121.5 | 1.498 | 1024 | 389 | 88.8 | Yes |
| Example 6 | 182.0 | 108.3 | 1.681 | 1152 | 438 | 86.4 | Yes |
| Example 7 | 234.1 | 143.4 | 1.632 | 1285 | 488 | 84.5 | Yes |
| Comparative Example 1 | 132.0 | 159.0 | 0.830 | 818 | 311 | 90.8 | No |
| Comparative Example 2 | 233.0 | 257.2 | 0.906 | 823 | 313 | 91.0 | No |

Natural graphite with the charging capacitance of 512 mAh/dm³ was prepared as the negative electrode material. A negative electrode mixture was prepared by mixing 90 percent by mass of the natural graphite and 10 percent by mass of polyvinylidene fluoride as a binder. Then, the negative electrode mixture was dispersed in a solvent, N-methyl-pyrrolidone, to obtain slurry which was then uniformly applied on both sides of a negative electrode collector layer 22a made of a aluminum foil band of 10 µm thick and then dried and compression molded in order to form the negative electrode mixture layer 22b. Thereby the negative electrode 22 was fabricated. At this time, in Examples 1 to 7, the thickness B of the negative electrode mixture layer was changed as shown in Table 1 and the ratio (A/B) of the thickness of the positive electrode mixture layer 21b to the negative electrode mixture layer 22b was set to be 0.92 or more. Then, the negative electrode lead 26 made of nickel was attached on one end of the negative electrode collector layer 22a.

After fabricating each of the positive electrode 21 and the negative electrode 22, the separator 23 made of microporous polyethylene drawing film was prepared. The negative electrode 22, the separator 23, the positive electrode 21, and the separator 23 were stacked in this order and the stacked body was rolled a number of times, thereby obtaining the rolled electrode body 20 with the outside diameter of 14 mm.

After fabricating the rolled electrode body 20, the rolled electrode body 20 was sandwiched by a pair of insulating plates 12 and 13, the negative electrode lead 26 was welded to the battery can 11, and the positive electrode lead 25 was welded to the safety valve mechanism 15. Then, the rolled electrode body 20 was enclosed inside the battery can 11 made of nickel-plated iron. Then, electrolytic solution was injected inside the battery can 11 by reducing pressure. The electrolytic solution used was obtained by dissolving 1.5 mol/dm³ of LiPF₆ as an electrolyte salt m a nonaqueous solvent in which 20 percent by mass of ethylene carbonate, 56 percent by mass of dimethyl carbonate, 4 percent by mass of ethyl methyl carbonate and 20 percent by mass of propylene carbonate were mixed. The amount of the electrolytic solution to be injected was 3.0 g.

After injecting the electrolytic solution inside the battery can 11, the battery cover 14 is caulked to the battery can 11 with a gasket 17 in which asphalt was applied in between. Thereby, a cylindrical-type secondary battery having the diameter of 14 mm and the height of 65 mm was obtained in each of Examples 1 to 7.

Charging/discharging test was conducted on the obtained secondary batteries of Examples 1 to 7 so as to obtain the discharging capacity, the energy densities, and the discharging capacity retention rate of the batteries. At this time, charging was conducted at a constant current of 300 mA until the battery voltage reached 4.2 V, then continued for a total of five hours at a constant voltage of 4.2 V. The voltage between the positive electrode 21 and the negative electrode 22 right before completing charging was 4.2 V and the value of the current was 5 mA or less. On the other hand, discharging was conducted at a constant current of 300 mA until the battery voltage reached 2.75 V. When charging/discharging is conducted under the condition described herein, a battery is to be in a full-charged state or complete-discharged state. The discharging capacity and the energy density of the battery were set to be the 2^{nd} cycle discharging capacity and the energy density, and the discharging capacity retention rate was obtained as the fraction of 200^{th} cycle discharging capacity to the 2^{nd} cycle discharging capacity. The results are shown in Table 1.

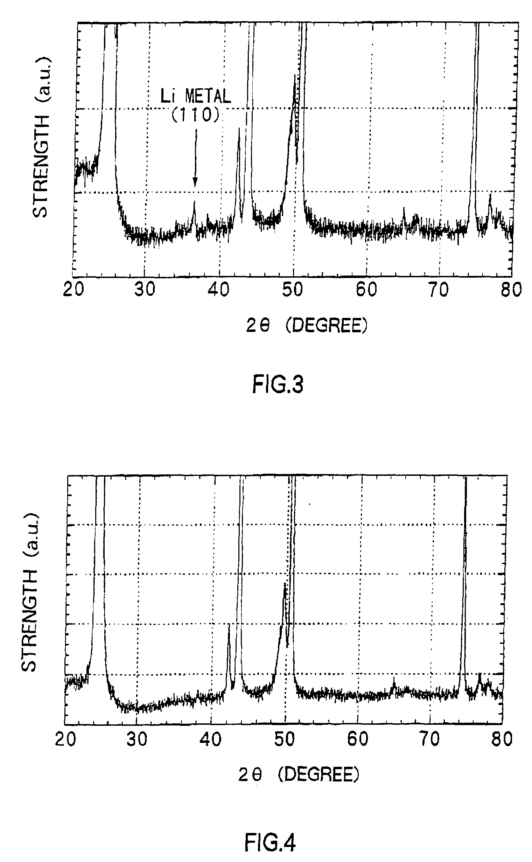

Also, the secondary batteries of Example 1 to 7 were charged/discharged for 10 cycles under the above-mentioned condition and then full-charged again. The batteries were then decomposed to study by X-ray diffraction measurement if there was precipitation of lithium metal in the negative electrode mixture layer 22b. The results are shown in Table 1. Also, the X-ray diffraction profile obtained in Example 1 is shown in Fig. 3.

As Comparative Examples 1 and 2 of the Examples, secondary batteries were fabricated in the same manner as that in Examples 1 to 7, except that the thickness A of the positive electrode mixture layer and the thickness B of the negative electrode mixture layer were changed as shown in Table 1 and the ratio of the thickness (A/B) was set to be less than 0.92, as shown in Table 1. Also, in the secondary batteries of Comparative Examples 1 and 2, the discharging capacity, the energy density, the discharging capacity retention rate of the battery, and existence of precipitation of lithium metal under the full-charged state were studied in the same manner as that in Examples 1 to 7. The results are shown in Table 1. Also, the X-ray diffraction profile obtained in Comparative Example 1 is shown in Fig. 4.

As can be seen from Table 1, Fig. 3 and Fig. 4. X-ray diffraction peak corresponding to (110) plane of lithium metal was observed in Examples 1 to 7. On the contrary, no X-ray diffraction peak of lithium metal was observed in Comparative Examples 1 and 2. In other words, in Examples 1 to 7, it was verified that the capacity of the negative electrode was expressed by the capacity component of occluding/releasing lithium and the capacity component of precipitating/dissolving lithium metal.

Also, as can be seen from Table 1, larger values in both the discharging capacity and the energy density were obtained in Examples 1 to 7 compared to Comparative Examples 1 and 2, and about the same excellent values in the discharging capacity retention rate were obtained. Furthermore, the values of the discharging capacity and the energy density tended to be larger when the ratio (A/B) of the thickness A of the positive electrode mixture layer 21b to the thickness B of the negative electrode mixture layer 22b became larger. In other words, it was verified that by setting the ratio (A/B) of the thickness A of the positive electrode mixture layer 21b to the thickness B of the negative electrode mixture layer 22b 0.92 or more, stable precipitation of lithium metal in the negative electrode 22 can be achieved in the state where the open circuit voltage is lower than the overcharge voltage and a high energy density and an excellent cycle characteristic can be obtained at the same time.

The invention has been described by referring to the embodiment and Examples. However, the invention is not limited to the above-mentioned embodiment and Examples but various kinds of modifications are possible. For example, in the above-mentioned embodiment and Examples, the case of using lithium as light metal has been described. However, the invention is also applicable to the cases using other alkali metals such as sodium (Na) or potassium (K), alkaline-earth metals such as magnesium (Ma) or calcium (Ca), other light metals such as aluminum (Al), lithium, or alloys of these. The same effects can also be obtained in these cases. In those cases, the negative electrode material capable of occluding/releasing light metal, the positive electrode material, the nonaqueous solvent, the electrolytic salt and the like are selected according to the light metal to be used. However, it is preferable to use lithium or alloy containing lithium as the light metal since the voltage is highly compatible with lithium-ion secondary batteries which have already been put in a practical use.

Also, in the above-mentioned embodiment and Examples, the case of using an electrolytic solution or gel electrolyte which is a kind of solid electrolyte have been described. However, other electrolyte may be used. Examples of other electrolyte are an organic solid electrolyte in which electrolytic salt is dispersed onto an ion-conductive polymer, ion-conductive ceramics, ion-conductive glasses, an inorganic solid electrolyte made of ionic crystals or the like, mixture of the inorganic solid electrolyte and an electrolytic solution, mixture of the inorganic solid electrolyte and the gel electrolyte, and mixture of the inorganic solid electrolyte and the organic solid electrolyte.

Furthermore, in the above-mentioned embodiment and Examples, a cylindrical-type secondary battery with a rolled structure has been described. However, the invention is also applicable to an elliptic-type secondary battery or a polygonal-type secondary battery with a rolled structure, or a secondary battery with a structure in which a positive electrode and a negative electrode are folded or stacked. Additionally, the invention is also applicable to so-called a coin-type, button-type or card-type secondary battery.

As described, in a secondary battery of the invention, the ratio (A/B) of the thickness A of the positive electrode mixture layer to the thickness B of the negative electrode mixture layer is set to be 0.92 or more. Therefore, stable precipitation of lithium metal in the negative electrode can be achieved in the state where the open circuit voltage is lower than the overcharge voltage. Thereby, a high energy density and an excellent cycle characteristic can be stably obtained.

Especially, in a secondary battery in one aspect of the invention, each of the thickness A of the positive electrode mixture layer and the thickness B of the negative electrode mixture layer is set to be within the range of 80 µm to 250 µm, both inclusive. Therefore, the energy density can be more improved and peeling of the positive electrode mixture layer and the negative electrode mixture layer can be suppressed.

Obviously many modifications and variations of the present invention are possible in the light of above teachings. It is therefore to be understood that within the scope of the appended claims the invention may be practiced other wise than as specifically described.

## Claims

1. A secondary battery comprising a positive electrode, a negative electrode, and an electrolyte, wherein:
the positive electrode includes a positive electrode mixture layer capable of occluding and releasing light metal;
the negative electrode includes a negative electrode mixture layer capable of occluding and releasing light metal;
capacity of the negative electrode is expressed by the sum of a capacity component by occluding and releasing light metal and a capacity component by precipitating and dissolving light metal; and
the ratio (A/B) of thickness A of the positive electrode mixture layer and thickness B of the negative electrode mixture layer is 0.92 or more.

2. A secondary battery as claimed in claim 1, wherein each of the thickness A of the positive electrode mixture layer and the thickness B of the negative electrode mixture layer lies within the range of 80 µm to 250 µm, both inclusive.

3. A secondary battery as claimed in claim 1, wherein the negative electrode mixture layer contains a carbonaceous material.

4. A secondary battery as claimed in claim 1, wherein the negative electrode mixture layer contains graphite.

5. A secondary battery as claimed in claim 1, wherein the light metal includes lithium.

6. A secondary battery as claimed in claim 1, wherein the electrolyte contains LiPF₆.

7. A secondary battery as claimed in claim 1, wherein the electrolyte contains a nonaqueous solvent and electrolytic salt, where the concentration of the electrolytic salt in the nonaqueous solvent is 2.0 mol/kg or less.
